# EUROPÄISCHE PATENTSCHRIFT

(11) **EP 1 134 448 B1**
(45) Veröffentlichungstag und Bekanntmachung des Hinweises auf die Patenterteilung: **02.11.2006**
(21) Anmeldenummer: 01101932.0
(22) Anmeldetag: 29.01.2001
(51) Int. Cl.: F16D 65/20

(54) **Betätigungskolben für eine Kraftfahrzeugbremsvorrichtung**
Actuator piston for a motor vehicle brake device
Piston d'actionnement pour frein d'automobile

(30) Priorität: 15.03.2000 DE 10012455
(43) Veröffentlichungstag der Anmeldung: 19.09.2001
(73) Patentinhaber: Continental Teves AG & Co. oHG, 60488 Frankfurt (DE)
(72) Erfinder: Henein, Nabil, 64297 Darmstadt (DE); Birkenbach, Alfred, 65795 Hattersheim (DE)

(56) Entgegenhaltungen:
- DE-A- 4 328 836
- US-A- 3 797 611
- US-A- 4 294 335
- US-A- 5 136 772
- US-A- 5 172 792
- PATENT ABSTRACTS OF JAPAN vol. 008, no. 132 (M-303), 20. Juni 1984 (1984-06-20) & JP 59 034033 A (AKEBONO BRAKE KOGYO KK), 24. Februar 1984 (1984-02-24)

## Beschreibung

Die Erfindung betrifft einen Betätigungskolben für eine Kraftfahrzeugbremsvorrichtung mit Mitteln zum hydraulischen Betätigen der Bremsvorrichtung und mit Mitteln zum mechanischen Betätigen der Bremsvorrichtung, mit einem Außenteil und mindestens einem Innenteil, wobei diese aus jeweils unterschiedlichen Werkstoffen bestehen, und wobei das Innenteil mit einer Konusfläche hinterschneidungsfrei in das Außenteil einschiebbar ist, sowie mit einem oder mehreren, formschlüssig wirksamen, Mitnehmern, welche an dem Innenteil angeordnet sind, und in das Außenteil eingreifen, oder umgedreht.

Ein derartiger Kolben ist beispielsweise aus der DE 298 01 364 U1 bekannt und umfasst ein radial äußeres, erstes, Kolbenteil aus einem Leichtwerkstoff mit geringer Festigkeit, und ein radial inneres, zweites, Kolbenteil mit im Vergleich zu dem ersten Kolbenteil höherer Festigkeit, welches eine axialkraftübertragende Konusfläche aufweist. Gemäß dem genannten Gebrauchsmuster sollen die beiden Kolbenteile mittels angießen oder anspritzen als einstückiges, und somit unlösbares, Verbundbauteil vorliegen.

Die bekannte Bauweise ist nicht unproblematisch. Einerseits erfordert die Herstellung eines derartigen Werkstoffverbundes regelmäßig eine Vorwärmung des Teiles, an dem das andere Teil angespritzt oder angegossen werden soll. Die Vorwärmung ist notwendig, weil das Angießen oder Anspritzen bei (Kunststoff-) Werkstoffschmelztemperatur vorgenommen wird. In der Konsequenz dürfen die beiden zu verbindenden Teile jedoch keine Temperaturdifferenz aufweisen, welche nach Erkaltung zu Spannungen, Verzug oder einer unvollständigen Verbindung führen. Der Vorwärmvorgang erfordert nicht nur Mittel für die Wärmebehandlung, sondern auch eine sorgfältige und zeitnahe Handhabung der vorgewärmten Teile, denn diese müssen mit der vorgeschriebenen Temperatur in das Gieß- oder Spritzwerkzeug eingebracht werden. Die Überwachung der einzelnen Prozeßparameter, zu denen neben einer Positionsabfrage des Einlegeteils auch die Temperatur des Einlegeteils gehört, ist folglich unerläßlich, um einen korrekten und fehlerfreien Werkstoffverbund zu erzeugen. Es ist leicht einsehbar, daß diese Prozeßüberwachung aufwendig und kostenträchtig ist. Eine andere Problematik betrifft die grundsätzlich unterschiedlichen Temperaturausdehnungskoeffizienten zwischen den beiden Werkstoffen und die damit verbundenen Lösungserscheinungen des Materialverbundes.

In der US 4 294 335 wird offenbart, die obigen Nachteile durch die Verwendung eines zweiteiligen Kolbens zu vermeiden. Dabei sind ein radial äußerer Teil und ein Innenteil vorgesehen, wobei das Innenteil in das Außenteil hinterschneidungsfrei einschiebbar ist. Um beide Teilen gegen Verdrehen zu sichern, sind mehrere formschlüssig wirksame Mitnehmer vorgesehen, welche in dem Innenteil angeordnet sind, und in das Außenteil eingreifen. Hierbei wirkt sich nachteilig aus, dass dadurch die Anzahl der Bauteile erhöht wird, wodurch die Herstellungskosten und die Komplexität des Montageprozesses steigen.

Aufgabe der vorliegenden Erfindung ist es daher, eine einfachere, und somit kostengünstigere Betätigungskolbenanordnung bereitzustellen, welche darüber hinaus eine unkomplizierte Prozeßführung erlaubt und dennoch beim Einsatz in einer Bremsvorrichtung über eine lange Zeit und einen großen Temperaturbereich problemlos funktioniert.

Diese Aufgabe wird mit den kennzeichnenden Merkmalen des Patentanspruches 1 dadurch gelöst, dass die radial ausgerichteten Mitnehmer nach dem Einschieben des Innenteils in das Außenteil durch einen Umformvorgang ausgebildet sind.

Eine weitere vorteilhafte Ausführungsform der Erfindung zeichnet sich dadurch aus, dass das Innenteil sowohl die Konusfläche als auch einen Kolbenboden aufweist.

In weiterer Ausgestaltung der Erfindung ist es schließlich denkbar, an dem Innenteil wenigstens einen Schenkel vorzusehen, welcher das Einschieben des Innenteils in das Außenteil nicht behindert, und für die Gewährleistung einer drehmomentübertragenden Verbindung zwischen Innen- und Außenteil derart verformbar ist, daß er einen Absatz des Außenteil formschlüssig hintergreift, oder reibschlüssig an einer Fläche des Außenteil anliegt.

Besonders vorteilhaft zeigt sich dieses Lösungskonzept, wenn das Außenteil eine offene sowie zylindrische Ausnehmung mit vergrößertem Durchmesser aufweist, und die Ausnehmung im Bereich eines Durchmesserabsatzes in eine Zentrier- und Führungsbohrung mit geringerem Durchmesser als die Ausnehmung übergeht.

Eine zusätzliche Ausgestaltung der Erfindung beinhaltet, dass das Innenteil zwischen einem Abschnitt geringeren Durchmessers und einem Abschnitt größeren Durchmessers einen umfangsseitigen Durchmesserabsatz aufweist, welcher in eine Radialnut übergeht, die an den Abschnitt geringeren Durchmessers angrenzt und einen Dichtring aufnimmt, welcher einen Spalt zwischen Außenteil und Innenteil verschließt.

Eine weitere Ausführungsform der Erfindung umfasst einen Betätigungskolben für eine Kraftfahrzeugbremsvorrichtung mit Mitteln zum hydraulischen Betätigen der Bremsvorrichtung und mit Mitteln zum mechanischen Betätigen der Bremsvorrichtung, mit einem ersten Außenteil und einem zweiten Innenteil aus jeweils unterschiedlichen Werkstoffen, wobei das Innenteil mit einer Konusfläche hinterschneidungsfrei in das Außenteil einschiebbar ist, und mit einem dritten Teil, welches auch den Kolbenboden bildet, sowie mit radial am Umfang vorgenommener, insbesondere zueinander versetzter Verpressungen, zur Befestigung des Außenteils an dem dritten Teil, wobei die radialen Verpressungen nach dem Einschieben des Innenteils in das Außenteil durch einen Umformvorgang ausgebildet sind.

Weitere vorteilhafte Einzelheiten der Erfindung gehen aus Unteransprüchen im Zusammenhang mit der Beschreibung und der Zeichnung hervor. In der Zeichnung zeigt:
In der Zeichnung zeigt:
   Fig. 1: Eine Schnittdarstellung eines Kolbens wobei die obere Schnitthälfte den Stand der Technik gemäß DE 298 01 364 U1 und die untere Schnitthälfte ein erstes Ausführungsbeispiel der Erfindung zeigt;
   Fig. 2: jeweils im Halbschnitt vergleichbar Figur 1 zwei weitere Ausführungsformen der Erfindung, und
   Fig. 3: eine vierte Ausführungsform der Erfindung im Halbschnitt.

Ein Betätigungskolben 1 für eine Kraftfahrzeugbremsvorrichtung besteht aus einem Außenteil 2 (erstes Teil) aus einem Leichtwerkstoff wie beispielsweise Kunststoff, Aluminium oder anderem Material mit vergleichsweise geringer Festigkeit und einem Innenteil 3 (zweites Teil) aus einem im Vergleich mit dem Außenteil 2 höherfesten Werkstoff. Der Kolben 1 ist, wie allgemein bekannt, hydraulisch betätigbar in einem Gehäuse 4 bewegbar geführt angeordnet und weist darüber hinaus Mittel 5 für eine mechanische Betätigung auf. Hierzu ist an dem Innenteil 3 eine hochfeste Konusfläche 6 vorgesehen, welche mechanisch aufgebrachte Betätigungskräfte auf (und über) das Außenteil 2 und von dort auf hier nicht weiter interessierende Bremsbeläge überträgt. Diese Bauweise mit dem Innenteil 3 ist erforderlich, weil der Leichtwerkstoff des Außenteils 2 zumindest im Bereich der Konusfläche 6 nicht die im Betrieb auftretenden Beanspruchungen infolge mechanischer Betätigung ertragen würde. Der Stand der Technik weist zu diesem Zweck ein in den Leichtwerkstoff eingebettetes Innenteil 3 aus hochfestem Werkstoff auf, an dem die Konusfläche vorgesehen ist. Diese Bauweise ist nicht unproblematisch.

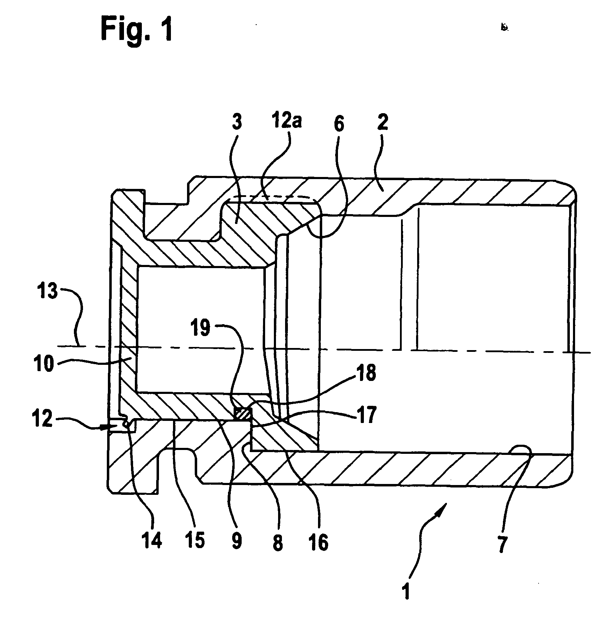

Eine Lösung der Problematik ist gemäß Figur 1 (untere Hälfte der Schnittdarstellung) dadurch gekennzeichnet, daß das Innenteil 3 mit der Konusfläche 6 (welches hier auch einen Kolbenboden 10 bildet) hinterschneidungsfrei in das Außenteil 2 einschiebbar ist, und das Außenteil 2 für diesen Zweck eine offene sowie zylindrische Ausnehmung 7 mit vergrößertem Durchmesser aufweist, und daß die Ausnehmung 7 im Bereich eines Durchmesserabsatz 8 in eine Zentrier- und Führungsbohrung 9 mit geringerem Durchmesser als die Ausnehmung 7 übergeht. Diese Bauweise macht es möglich, das Innenteil 3 einfach in das aufnehmende Außenteil 2 einzuschieben, ohne einen komplizierten Gießvorgang vornehmen zu müssen. Bei dieser Ausführungsform ist folglich nicht nur die Konusfläche 6, sondern auch der Kolbenboden 10 aus einem höherfesten Werkstoff als das Außenteil 2.

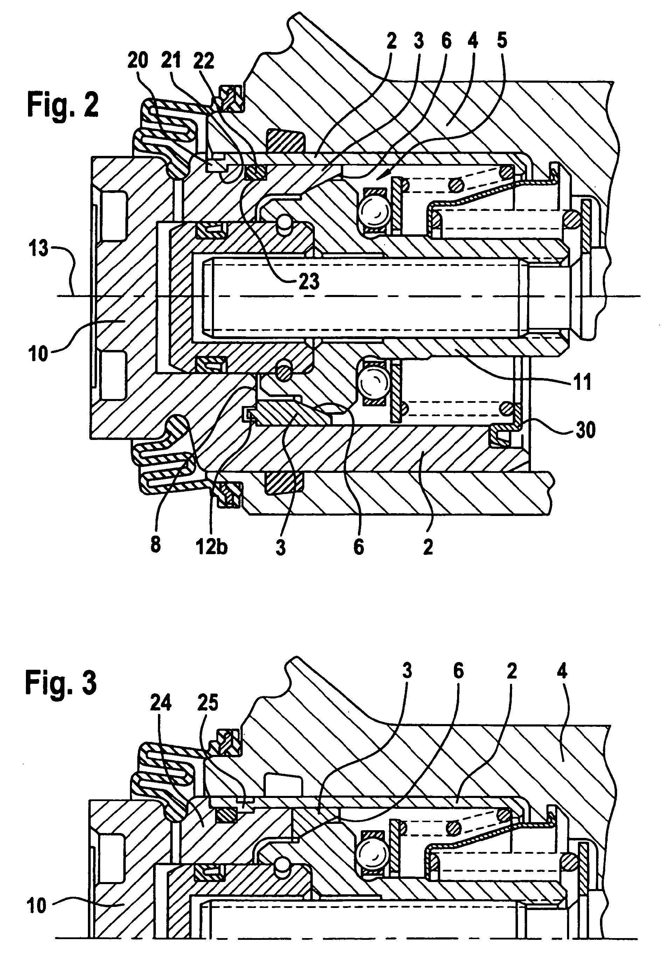

Aus Funktionsgründen ist es schließlich notwendig, daß das Innenteil 3 gegenüber dem Außenteil 2 verdrehgesichert ist. Dies ist erforderlich, weil die Konusfläche 6 eine wichtige Aufgabe im Zusammenhang mit einer automatischen Nachstellvorrichtung 11 für eine Parkbremsvorrichtung hat. Die genannte Verdrehsicherung erfolgt mittels einem oder mehrerer, formschlüssig wirksamer, Mitnehmer 12 die an dem Außenteil 2 angeordnet sind, und in das Innenteil 3 eingreifen. Ganz grundsätzlich ist es auch denkbar, die Mitnehmer 12 an dem Innenteil 2 anzuordnen, so daß diese in Ausnehmungen in dem Außenteil 2 eingreifen, wie es in Figur 1 gezeigt ist. Dabei ist es besonders vorteilhaft die Mitnehmer 12 durch einen Umformvorgang auszubilden nachdem das Innenteil 3 und das Außenteil 2 bereits ineinander geschoben worden sind. Die Mitnehmer 12 erfüllen damit eine Kombinationsfunktion. Einerseits befestigen sie das Innenteil 3 am Außenteil 2 und andererseits sorgen sie für die Verdrehsicherung. Eine vergleichsweise preisgünstige Anordnungsmöglichkeit für die Mitnehmer 12, welche im übrigen auch aus dem eingangs genannten Gebrauchsmuster hervorgeht, besteht darin diese am Umfang des Innenteils 3 nach Art einer Kerbverzahnung 12a vorzusehen, so daß die Zähne in Ausnehmungen des Außenteils 2 eingreifen. Allerdings schwächt diese Bauweise die Wandung des Außenteils 2 erheblich und führt zu entsprechender Kerbwirkung in der knickempfindlichen Wandung. Insbesondere wenn die Bremsbeläge verschlissen sind, und der Kolben 1 vergleichsweise weit aus dem Gehäuse 4 austritt, entsteht somit eine erhöhte Knickgefahr, weil zusätzlich zu der Kerbwirkung die Führungslänge innerhalb dem Gehäuse 4 reduziert ist. Die Mitnehmer 12b werden deshalb in Anlehnung an Figur 2 unten im Bereich des Durchmesserabsatz 8 und zwar in axialer Richtung parallel zu einer Kolbenachse 13 vorgesehen. Diese Maßnahme vereinfacht den Montagevorgang in mehrfacher Weise, ermöglicht optimierten Leichtbau, und bietet auch Vorteile bezüglich der Bauteilfestigkeit. Eine kerbwirkungsbedingte Schwächung der Kolbenwandung infolge der Mitnehmer 12a, wie bei der bekannten Lösung, wird folglich vermieden. Eine andere alternative und nicht gezeichnete Lösung zu der axialen Anordnung (welche ebenfalls Festigkeitsvorteile aufweist) wäre dadurch gekennzeichnet, daß die Mitnehmer 12 gewissermaßen nach radial innen in Ausnehmungen vom Kolbenboden des Außenteil 2 eingreifen. Auch eine solche Lösung verringert die Kerbwirkung und die Knickgefahr im Bereich der Kolbenwandung.

Weil die Erfindung eine Reduktion der Kerbwirkung im Bereich der Kolbenwandung erlaubt, wird insoweit auch der Einsatz von kostengünstigeren und tendenziell kerbempfindlichen, spröden Leichtwerkstoffen für das Außenteil 2 ermöglicht. Die Erfindung erlaubt beispielsweise die Verwendung eines temperatur- und bremsflüssigkeitsresistenten Duroplasten mit faserverringertem Füllstoffanteil und insbesondere die Verwendung des seit langem bekannten Melamin-Formaldehyd oder Harnstoff-Formaldehyd (Handelsname Bakelit) als Werkstoff für das Außenteil, obwohl ein solcher Werkstoff grundsätzlich äußerst kerbempfindlich reagiert.

Eine weitere Problematik liegt in unterschiedlichen Temperaturausdehnungskoeffizienten von unterschiedlichen Werkstoffen begründet. Bei dem Stand der Technik gemäß dem eingangs beschriebenen Gebrauchsmuster würde insoweit bei Temperaturen oberhalb der Raumtemperatur - angesichts der umgewandelten Bremsenergie ein unvermeidbarer Betriebszustand - ein selbstlösender Effekt und auch eine Neigung zu hydraulischen Undichtigkeiten auftreten, weil der radial äußere Leichtwerkstoff (beispielsweise Kunststoff mit einem Ausdehnungskoeffizienten von etwa 200 * 10⁻⁶/K) ein größeres Ausdehnungsbestreben hat, als das radial innere Stahlbauteil (mit einem Ausdehnungskoeffizienten von etwa 18 * 10⁻⁶/K). Mit anderen Worten wird ein Kolben nach dem Stand der Technik gemäß dem Gebrauchsmuster im Betrieb immer instabiler, weil die formschlüssige Überdeckung der Umfangsverzahnung abnimmt. Ein selbstlösender Effekt wird erfindungsgemäß vermieden.

Der Montagevorteil der Erfindung ergibt sich auch dadurch, daß das Einsetzen und Einschieben des Innenteils 3 unabhängig von der Positionierung der Mitnehmer 12 durchgeführt werden kann. Im Unterschied zu der bekannten Lösung mit einer Verzahnung am Umfang des Innenteils 3 erfolgt ein Ineinandergreifen von Mitnehmer 12 und Ausnehmung erst im Rahmen des Ineinanderschiebens kurz bevor die beiden Teile 2,3 axial aneinander anliegen. Dabei liegt im Unterschied zu einer Umfangsverzahnung auch der Vorteil vor, daß sich Mitnehmer 12 und Ausnehmung unter der Wirkung einer bestimmten Axialkraft (auf die Konusfläche 6) und im Rahmen einer Relativverdrehung von dem Außenteil 2 relativ zu dem Innenteil 3 gewissermaßen selbsttätig "finden", sofern sich diese beiden zugeordneten Bauteile nicht bereits zuvor "gefunden" haben.

Die axiale Fixierung von Außenteil 2 und Innenteil 3 erfolgt gemäß Figur 1 unten dadurch, daß an dem Innenteil 3, ein an einem durch das Außenteil 2 ragenden Ende angeordneter verformbarer Schenkel 14 vorgesehen ist, welcher das Einschieben des Innenteils 3 in das Außenteil 2 zunächst nicht behindert, und für die Gewährleistung einer drehmomentübertragenden Verbindung zwischen Innen- und Außenteil 3,2 derart nach radial außen verformbar ist, daß er einen Absatz des Außenteils 2 formschlüssig hintergreift, und gegebenenfalls zusätzlich reibschlüssig an einer Fläche des Außenteils 2 anliegt.

Die hydraulische Abdichtung zwischen Außen- und Innenteil 2,3 läßt sich schließlich dadurch verbessern, daß das Innenteil 3 zwischen einem Abschnitt geringeren Durchmessers 15 und einem Abschnitt größeren Durchmessers 16 einen umfangsseitigen Durchmesserabsatz 17 aufweist, welcher in eine Radialnut 18 übergeht, die an dem Abschnitt geringeren Durchmessers 15 angrenzt und einen Dichtring 19 aufnimmt, welcher einen Spalt zwischen Außen- und Innenteil 2,3 verschließt.

Der Einschubvorgang erfolgt gemäß dem in Figur 2 unten gezeigten Ausführungsbeispiel lösbar, das heißt, daß das Innenteil 3 mit der Konusfläche 6 im Unterschied zu der oben genannten Variante beispielsweise für Ersatzzwecke austauschbar ist. Die Figur verdeutlicht auch die axiale, und damit temperaturneutrale, Anordnung eines Mitnehmers 12b. Eine Demontage läßt sich beispielsweise dadurch weiter vereinfachen, daß das Innenteil 3 mit der Konusfläche 6 mit Demontagemitteln versehen ist. Zur Ausbildung eines Widerlagers am Kolben für eine im Kolbeninnern angeordnete Feder ist ein Federtopf 30 vorgesehen. Der Federtopf 30 ist vorzugsweise aus Blech ausgeführt und mit radial sich erstreckenden Federarmen im Außenteil 2 des Kolbens verkrallt. Dazu ist der Federtopf 30 am Umfang insbesondere geschlitzt ausgeführt.

Bei einer Ausführungsform gemäß Figur 2 oben liegt ein im wesentlichen rohrförmiges Außenteil 2 aus Leichtwerkstoff vor, an dem ein Innenteil 3, welches den Kolbenboden 10 und die Konusfläche 6 aufweist, befestigt ist. Das Innenteil 3 weist hierbei eine entsprechende Tragfähigkeit und insbesondere Druckfestigkeit auf, um den herrschenden Kräften zu widerstehen. Der Befestigung des Außenteils 2 an dem Innenteil 3 dienen (bei metallischem Werkstoff) als radial einwärts gerichtete Einprägungen 20 ausgebildete Mitnehmer. Hierbei verfügt das Innenteil 3 an seinem Außenumfang über im Abstand zueinander angeordnete Vertiefungen 21, in die das rohrförmige Stück des Außenteils 2 jeweils in diesem Bereich eingeprägt ist. In axialem Abstand zu den Einprägungen 20 ist schließlich ein Dichtring 22 vorgesehen, der im wesentlichen in einer radial äußeren Radialnut 23 des Außenteils 2 aufgenommen ist.

Bei einer anderen Ausführungsform gemäß Figur 3 ist der Kolben 1 im wesentlichen dreistückig und verfügt über ein rohrförmiges Außenteil 2, ein Innenteil 3 mit einer Konusfläche 6 und schließlich ein drittes Teil 24, welches auch den Kolbenboden 10 bildet. Die Befestigung des Außenteils 2 an dem dritten Teil, welches den Kolbenboden 10 bildet, erfolgt mittels radial am Umfang vorgenommener, und insbesondere zueinander versetzter Verpressungen 25, vergleichbar den Einprägungen 20 gemäß Figur 2 oben.

## Patentansprüche

1. Betätigungskolben (1) für eine Kraftfahrzeugbremsvorrichtung mit Mitteln zum hydraulischen Betätigen der Bremsvorrichtung und mit Mitteln (5) zum mechanischen Betätigen der Bremsvorrichtung, mit einem ersten Außenteil (2) und einem zweiten Innenteil (3) aus jeweils unterschiedlichen Werkstoffen, wobei das Innenteil (3) mit einer Konusfläche (6) hinterschneidungsfrei in das Außenteil (2) einschiebbar ist, sowie mit einem oder mehreren, formschlüssig wirksamen, Mitnehmern (12, 12b, 20, 25), welche an dem Innenteil (3) angeordnet sind, und in das Außenteil (2) eingreifen, oder umgedreht, **dadurch gekennzeichnet, dass** die radial ausgerichteten Mitnehmer (12,20) nach dem Einschieben des Innenteils (3) in das Außenteil (2) durch einen Umformvorgang ausgebildet sind.

2. Betätigungskolben nach Anspruch 1, **dadurch gekennzeichnet, dass** das Innenteil (3) sowohl die Konusfläche (6) als auch einen Kolbenboden (10) aufweist.

3. Betätigungskolben nach Anspruch 1 oder 2, **dadurch gekennzeichnet, dass** an dem Innenteil (3) wenigstens ein verformbarer Schenkel (14) vorgesehen ist, welcher das Einschieben des Innenteils (3) in das Außenteil (2) nicht behindert, und für die Gewährleistung einer drehmomentübertragenden Verbindung zwischen Außen- und Innenteil (2, 3) derart verformbar ist, dass er einen Absatz des Außenteils (2) formschlüssig hintergreift, oder reibschlüssig an einer Fläche des Außenteils (2) anliegt.

4. Betätigungskolben nach Anspruch 1, **dadurch gekennzeichnet, dass** das Außenteil (2) eine offene sowie zylindrische Ausnehmung (7) mit vergrößertem Durchmesser aufweist, und dass die Ausnehmung (7) im Bereich eines Durchmesserabsatzes (8) in eine Zentrier- und Führungsbohrung (9) mit geringerem Durchmesser als die Ausnehmung (7) übergeht.

5. Betätigungskolben nach einem oder mehreren der vorhergehenden Ansprüche 1 bis 4, **dadurch gekennzeichnet, dass** das Innenteil (3) zwischen einem Abschnitt geringeren Durchmessers (15) und einem Abschnitt größeren Durchmessers (16) einen umfangsseitigen Durchmesserabsatz (17) aufweist, welcher in eine Radialnut (18) übergeht, die an den Abschnitt geringeren Durchmessers (15) angrenzt und einen Dichtring (19) aufnimmt, welcher einen Spalt zwischen Außenteil (2) und Innenteil (3) verschließt.

6. Betätigungskolben (1) für eine Kraftfahrzeugbremsvorrichtung mit Mitteln zum hydraulischen Betätigen der Bremsvorrichtung und mit Mitteln (5) zum mechanischen Betätigen der Bremsvorrichtung, mit einem ersten Außenteil (2) und einem zweiten Innenteil (3) aus jeweils unterschiedlichen Werkstoffen, wobei das Innenteil (3) mit einer Konusfläche (6) hinterschneidungsfrei in das Außenteil (2) einschiebbar ist, und mit einem dritten Teil (24), welches auch den Kolbenboden (10) bildet, sowie mit radial am Umfang vorgenommener, zueinander versetzter Verpressungen (25) zur Befestigung des Außenteils (2) an dem dritten Teil (24), wobei die radialen Verpressungen (25) nach dem Einschieben des Innenteils (3) in das Außenteil (2) durch einen Umformvorgang ausgebildet sind.

7. Betätigungskolben nach Anspruch 1 oder 6, **dadurch gekennzeichnet, dass** das Innenteil (3) mit der Konusfläche (6) lösbar in das Außenteil (2) einschiebbar ist.

## Claims

1. Actuating piston (1) for a motor vehicle brake device including means for hydraulically actuating the brake device and means (5) for mechanically actuating the brake device, including a first outer part (2) and a second inner part (3) each made up of different materials, the inner part (3) with a cone surface (6) being adapted to be slipped into the outer part (2) without undercuts, and including one or more formlockingly active catches (12, 12b, 20, 25) which are arranged at the inner part (3) and engage into the outer part (2), or vice-versa,
**characterized in that** the radially aligned catches (12, 20) are designed in a forming operation after the inner part (3) has been slipped into the outer part (2).

2. Actuating piston as claimed in claim 1,
**characterized in that** the inner part (3) includes both the cone surface (6) and a piston bottom (10).

3. Actuating piston as claimed in claim 1 or 2,
**characterized in that** at least one deformable leg (14) is provided at the inner part (3), which does not inhibit the slipping of the inner part (3) into the outer part (2) and, for ensuring a torque-transmitting connection between outer and inner parts (2, 3), is deformable in such a way that it backgrips a step of the outer part (2) in form-lock, or bears against a surface of the outer part (2) in frictional engagement therewith.

4. Actuating piston as claimed in claim 1,
**characterized in that** the outer part (2) includes an open and cylindrical recess (7) of increased diameter, and **in that** the recess (7) in the area of a step of diameters (8) passes over into a centring and guiding bore (9) having a smaller diameter than the recess (7).

5. Actuating piston as claimed in any one or more of the preceding claims 1 to 4,
**characterized in that** the inner part (3) between a portion of small diameter (15) and a portion of larger diameter (16) has a step of diameters (17) at the circumference, which passes over into a radial groove (18) that is adjacent to the small-diameter portion (15) and receives a sealing ring (19), which closes a slot between outer part (2) and inner part (3).

6. Actuating piston (1) for a motor vehicle brake device including means for hydraulically actuating the brake device and means (5) for mechanically actuating the brake device, including a first outer part (2) and a second inner part (3) each made up of different materials, the inner part (3) with a cone surface (6) being adapted to be slipped into the outer part (2) without undercuts, and including a third part (24) which also forms the piston bottom (10) as well as pressed portions (25) provided radially at the periphery and being offset relative to each other for attaching the outer part (2) at the third part (24), with the radial pressed portions (25) being designed in a forming operation after the inner part (3) has been slipped into the outer part (2).

7. Actuating piston as claimed in claim 1 or 6,
**characterized in that** the inner part (3) with the cone surface (6) can be slipped into the outer part (2) in a detachable fashion.

## Revendications

1. Piston de commande (1) pour un système de frein d'automobile comportant des moyens pour la commande hydraulique du système de frein et des moyens (5) pour la commande mécanique du système de frein, et comportant une première partie extérieure (2) et une seconde partie intérieure (3) fabriquées de matières différentes, la partie intérieure (3) avec sa surface (6) conique étant insérable de manière non-dépouillée dans la partie extérieure (2), et comportant un ou plusieurs guides (12, 12b, 20, 25) commandés mécaniquement et disposés à la partie intérieure (3), en faisant engrener la partie extérieure (2) ou vice versa, **caractérisé en ce que** les guides (12, 20) alignés radialement après l'insertion de la partie intérieure (3) dans la partie extérieure (2) sont formés par un procédé de transformation.

2. Piston de commande selon la revendication 1, **caractérisé en ce que** la partie intérieure (3) comporte non seulement la surface conique (6) mais encore un fond de piston (10).

3. Piston de commande selon la revendication 1 ou 2, **caractérisé en ce qu'**au moins un côté (14) déformable est prévu à la partie intérieure (3) n'empêchant pas l'insertion de la partie intérieure (3) dans la partie extérieure (2) et, pour garantir un raccordement transférant le couple entre la partie extérieur et la partie intérieure (2, 3), étant déformable ainsi qu'elle dépouille un pas de la partie extérieure (2) de manière commandée mécaniquement ou joigne une surface de la partie extérieure (2) de manière résistante à friction.

4. Piston de commande selon la revendication 1, **caractérisé en ce que** la partie extérieure (2) comporte une gorge (7) ouverte sous forme cylindrique d'un diamètre élargie, et que la gorge (7) dans la portée du pas de diamètre (8) passe dans un alésage (9) de centrage et guide d'un diamètre réduit vis-à-vis la gorge (7).

5. Piston de commande selon l'une ou plusieurs de revendications précédentes 1 à 4, **caractérisé en ce que** la partie intérieure (3) entre une section d'un diamètre (15) réduit et une section d'un diamètre (16) plus large comporte un pas de diamètre (17) périphérique passant dans une rainure (18) radiale adjacente à la section de diamètre (15) réduit et cueillant un anneau de joint (19) fermant une fente entre la partie extérieure (2) et la partie intérieure (3).

6. Piston de commande (1) pour un système de frein d'automobile comportant des moyens pour la commande hydraulique du système de frein et des moyens (5) pour la commande mécanique du système de frein, et comportant une première partie extérieure (2) et une seconde partie intérieure (3) fabriquées de matières différentes, la partie intérieure (3) avec sa surface (6) conique étant insérable de manière non dépouillée dans la partie extérieure (2), et comportant une troisième partie (24) aussi formant le fond de piston (10), et comportant des pressages (25) prévus de manière radiale le long de la périphérie et disposés de manière décalée pour fixer la partie extérieure (2) à la partie troisième (24), les pressages radiaux (25) après l'insertion de la partie intérieure (3) dans la partie extérieure (2) étant formés par un procédé de transformation.

7. Piston de commande selon les revendications 1 ou 6, **caractérisé en ce que** la partie intérieure (3) avec la surface conique (6) est insérable de manière détachable dans la partie extérieure (2).
